# EUROPÄISCHE PATENTANMELDUNG

(11) **EP 3 705 205 A1**
(43) Veröffentlichungstag der Anmeldung: **09.09.2020**
(21) Anmeldenummer: 19160537.7
(22) Anmeldetag: 04.03.2019
(51) Int. Cl.: B22F 1/02, B22F 3/105, B22F 7/06, B33Y 10/00, B33Y 50/00, B29C 64/153, B29C 64/393

(54) **VERFAHREN UND VORRICHTUNG ZUR ADDITIVEN FERTIGUNG EINES BAUELEMENTS SOWIE COMPUTERPROGRAMM**

(71) Anmelder: Siemens Aktiengesellschaft, 80333 München (DE)
(72) Erfinder: Lebed, Yaroslav, 13629 Berlin (DE); Schäfer, Martin, 10557 Berlin (DE)

(57) **Zusammenfassung**

Die Erfindung betrifft ein Verfahren zur additiven Fertigung eines Bauelements (10), bei welchem Schichten (16) hergestellt und aufeinander angeordnet werden, wodurch das Bauelement (10) schichtweise hergestellt wird, wobei zumindest eine der Schichten (16) aus wenigstens zwei voneinander unterschiedlichen, pulverförmigen Ausgangsmaterialien (18, 20) hergestellt wird, indem das jeweilige Ausgangsmaterial (18, 20) mit wenigstens einem Energiestrahl (22) bestrahlt und dadurch geschmolzen wird.

## Beschreibung

Die Erfindung betrifft ein Verfahren zur additiven Fertigung eines Bauelements gemäß dem jeweiligen Oberbegriff von Patentanspruch 1, 2, 10 beziehungsweise 11. Des Weiteren betrifft die Erfindung eine Vorrichtung und ein Computerprogramm.

Derartige Verfahren zur additiven Fertigung von Bauelementen sind aus dem allgemeinen Stand der Technik bereits hinlänglich bekannt. Die additive Fertigung wird auch als generative Fertigung, additives Fertigungsverfahren oder generatives Fertigungsverfahren bezeichnet. Bei dem jeweiligen Verfahren zur additiven Fertigung werden Schichten hergestellt und aufeinander angeordnet, wodurch das jeweilige Bauelement schichtweise hergestellt wird. Die jeweilige Schicht wird dabei üblicherweise aus einem pulverförmigen Ausgangsmaterial, das heißt aus granularer Materie hergestellt, indem das pulverförmige Ausgangsmaterial mit wenigstens einem Energiestrahl beaufschlagt und somit bestrahlt und dadurch aufgeschmolzen wird. Hierdurch werden beispielsweise die Schichten in aufeinander angeordnetem Zustand miteinander verbunden, wodurch das Bauelement schichtweise, das heißt Schicht für Schicht, hergestellt wird.

Aufgabe der vorliegenden Erfindung ist es, ein Verfahren, eine Vorrichtung und ein Computerprogramm zu schaffen, sodass Bauelemente mit besonders vorteilhaften Eigenschaften auf besonders einfache Weise hergestellt werden können.

Diese Aufgabe wird erfindungsgemäß durch ein Verfahren mit den Merkmalen des Patentanspruchs 1, durch ein Verfahren mit den Merkmalen des Patentanspruchs 10, durch ein Verfahren mit den Merkmalen des Patentanspruchs 11, durch eine Vorrichtung mit den Merkmalen des Patentanspruchs 14 sowie durch ein Computerprogramm mit den Merkmalen des Patentanspruchs 15 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zur additiven Fertigung eines Bauelements. Die additive Fertigung wird auch als generative Fertigung, additives Fertigungsverfahren oder generatives Fertigungsverfahren bezeichnet. Insbesondere ist das Verfahren ein 3D-Druck oder 3D-Drucken. Bei dem Verfahren werden Schichten hergestellt und aufeinander angeordnet, wodurch das Bauelement aus den Schichten und somit schichtweise, das heißt Schicht für Schicht hergestellt wird.

Um dabei besonders vorteilhafte, insbesondere mechanische, Eigenschaften des Bauelements auf besonders einfache und somit auf besonders zeit- und kostengünstige Weise realisieren zu können, ist es erfindungsgemäß vorgesehen, dass zumindest eine der Schichten oder mehrere der Schichten oder alle Schichten aus wenigstens zwei voneinander unterschiedlichen, pulverförmigen Ausgangsmaterialien hergestellt wird oder werden, indem das jeweilige Ausgangsmaterial mit wenigstens einem Energiestrahl beaufschlagt und somit bestrahlt und dadurch geschmolzen wird. Das pulverförmige Ausgangsmaterial wird auch einfach als pulverförmiges Material, granulare Materie oder Pulver bezeichnet und umfasst eine Vielzahl an insbesondere eigensteifen Partikeln, welche zunächst lose, das heißt nicht miteinander verbunden sind. Durch Bestrahlen des pulverförmigen Ausgangsmaterials wird das Ausgangsmaterial beziehungsweise werden die Partikel erwärmt und dadurch geschmolzen, das heißt an- und/oder aufgeschmolzen. Hierdurch werden die Partikel der jeweiligen Schicht miteinander beziehungsweise untereinander verbunden, und es werden dadurch die Schichten, aus welchen das Bauelement hergestellt wird, miteinander beziehungsweise untereinander verbunden. Unter dem Merkmal, dass die zumindest eine Schicht aus wenigstens zwei voneinander unterschiedlichen, pulverförmigen Ausgangsmaterialien hergestellt wird, ist insbesondere zu verstehen, dass die zumindest eine Schicht an sich, das heißt für sich betrachtet, aus wenigstens einem ersten pulverförmigen Ausgangsmaterial und aus wenigstens einem von dem ersten pulverförmigen Ausgangsmaterial unterschiedlichen zweiten pulverförmige Ausgangsmaterial hergestellt wird. Die Ausgangsmaterialien, aus welchen die zumindest eine Schicht hergestellt wird, werden vorzugsweise mit demselben, insbesondere mit ein und demselben, oder mit dem gleichen Energiestrahl beaufschlagt und dadurch bestrahlt, sodass die zumindest eine Schicht und somit das Bauelement insgesamt zeit- und kostengünstig, das heißt besonders einfach hergestellt werden können. Durch die Verwendung der voneinander unterschiedlichen Ausgangsmaterialien können zudem bedarfsgerecht besonders vorteilhafte Eigenschaften des Bauelements realisiert werden.

Vorzugsweise wird als der Energiestrahl ein Laserstrahl verwendet, sodass beispielsweise das erfindungsgemäße Verfahren ein Laserschmelzverfahren oder ein Laserschmelzprozess ist. Die Verwendung der voneinander unterschiedlichen Ausgangsmaterialien ermöglicht eine bedarfsgerechte und multiple funktionelle Eigenschaftseinstellung des Bauelements in dem Verfahren, insbesondere in dem Laserschmelzprozess.

Vorzugsweise wird die zumindest eine Schicht in einem Pulverbett hergestellt. Hierzu werden beispielsweise die voneinander unterschiedlichen Ausgangsmaterialien in demselben Pulverbett angeordnet und - während die voneinander unterschiedlichen Ausgangsmaterialien in demselben Pulverbett angeordnet sind - mit dem Energiestrahl, insbesondere mit demselben Energiestrahl, beaufschlagt und somit bestrahlt. Insbesondere werden die voneinander unterschiedlichen Ausgangsmaterialien mit dem Energiestrahl bestrahlt, während die voneinander unterschiedlichen Ausgangsmaterialien gleichzeitig in demselben Pulverbett angeordnet sind. Hierdurch kann das Bauelement besonders einfach und somit zeit- und kostengünstig hergestellt werden.

Ein zweiter Aspekt der Erfindung betrifft ein Verfahren zur additiven Fertigung eines Bauelements. Bei dem Verfahren gemäß dem zweiten Aspekt der Erfindung werden Schichten hergestellt und aufeinander angeordnet, wodurch das Bauelement aus den Schichten und somit schichtweise, das heißt Schicht für Schicht hergestellt wird.

Um dabei auf besonders einfache und somit zeit- und kostengünstige Weise besonders vorteilhafte, insbesondere mechanische, Eigenschaften des Bauelements realisieren zu können, ist es bei dem zweiten Aspekt der Erfindung vorgesehen, dass eine erste der Schichten aus einem ersten pulverförmigen Ausgangsmaterial und eine zweite der Schichten aus einem von dem ersten pulverförmigen Ausgangsmaterial unterschiedlichen zweiten, pulverförmigen Ausgangsmaterial hergestellt wird, indem das jeweilige Ausgangsmaterial mit wenigstens einem Energiestrahl bestrahlt und dadurch geschmolzen wird. Vorzugsweise ist die zweite Schicht, insbesondere direkt, auf der ersten Schicht angeordnet. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Unter dem Merkmal, dass die zweite Schicht direkt auf der ersten Schicht angeordnet ist, kann insbesondere verstanden werden, dass zwischen der ersten und zweiten Schicht keine weitere, dritte Schicht des Bauelements angeordnet ist.

Auch bei dem zweiten Aspekt der Erfindung können durch die Verwendung der voneinander unterschiedlichen Ausgangsmaterialien bedarfsgerecht und besonders vorteilhaft unterschiedliche Eigenschaften der Schichten und somit des Bauelements insgesamt realisiert werden, sodass auf einfache und kostengünstige Weise vorteilhafte Eigenschaften des Bauelements dargestellt werden können.

Bei einer vorteilhaften Ausführungsform der Erfindung wird vor dem Herstellen der jeweiligen Schicht eines der Ausgangsmaterialien von dem anderen Ausgangsmaterial separiert. Dadurch kann das Bauelement bedarfsgerecht hergestellt werden. Die Ausgangsmaterialien sind beispielsweise zunächst gemeinsam und insbesondere miteinander vermischt in einem Behältnis angeordnet beziehungsweise aufgenommen. Mit anderen Worten liegen die pulverförmigen Materialien beispielsweise zunächst in miteinander vermischtem Zustand vor. Daraufhin werden die Ausgangsmaterialien voneinander separiert, woraufhin die jeweilige Schicht hergestellt wird. Hierdurch ist es beispielsweise möglich, die jeweilige Schicht wahlweise aus dem ersten pulverförmigen Ausgangsmaterial oder aus dem zweiten pulverförmigen Ausgangsmaterial herzustellen, insbesondere je nachdem, welches der Ausgangsmaterialien in dem Pulverbett verbleibt.

Als besonders vorteilhaft hat es sich gezeigt, wenn die Ausgangsmaterialien durch Zentrifugieren und/oder mittels wenigstens eines Magnetfelds voneinander separiert werden. Dadurch können die Ausgangsmaterialien gezielt und definiert voneinander separiert werden, sodass das Bauelement definiert hergestellt werden kann.

Eine weitere Ausführungsform zeichnet sich dadurch aus, dass die Ausgangsmaterialien in einem Fluid, insbesondere in einer Flüssigkeit, angeordnet und mittels des Fluids voneinander separiert werden. Bei dieser Ausführungsform werden beispielsweise voneinander unterschiedliche Dichten der Ausgangsmaterialien genutzt. Beispielsweise schwimmt eines der Ausgangsmaterialien auf dem Fluid auf, während das andere Ausgangsmaterial absinkt. Hierdurch können die Ausgangsmaterialien effektiv und effizient voneinander separiert werden. Als weiterhin besonders vorteilhaft hat es sich gezeigt, wenn das von dem anderen Ausgangsmaterial separierte eine Ausgangsmaterial nach dem Separieren der Ausgangsmaterialien in einem beziehungsweise in dem zuvor genannt Pulverbett angeordnet und danach mit dem Energiestrahl bestrahlt wird. Hierdurch kann die jeweilige Schicht gezielt aus dem gewünschten Ausgangsmaterial hergestellt werden, sodass auf einfache Weise und besonders gezielt gewünschte Eigenschaften des Bauelements eingestellt werden können.

Als besonders vorteilhaft hat es sich gezeigt, wenn die Ausgangsmaterialien in einem beziehungsweise in dem Pulverbett angeordnet und danach voneinander separiert werden, woraufhin das in dem Pulverbett verbleibende Ausgangsmaterial mit dem Energiestrahl bestrahlt wird. Hierdurch kann das Bauelement besonders zeit- und kostengünstig hergestellt werden.

Eine weitere Ausführungsform zeichnet sich dadurch aus, dass das erste Ausgangsmaterial wenigstens einen ersten Werkstoff aufweist, wobei das zweite Ausgangsmaterial den erste Werkstoff und einen zweiten Werkstoff aufweist. Dabei ist der erste Werkstoff des zweiten Ausgangsmaterials mit dem zweiten Werkstoff des zweiten Ausgangsmaterials ummantelt. Dies bedeutet beispielsweise, dass sich die Ausgangsmaterialien insbesondere hinsichtlich des zweiten Werkstoffs voneinander unterscheiden. Die Verwendung der Werkstoffe ermöglicht es beispielsweise, die Ausgangsmaterialien besonders einfach und somit zeit- und kostengünstig voneinander separieren zu können. Insbesondere ist es denkbar, die Ausgangsmaterialien auf besonders einfache Weise sowie besonders präzise mit Hilfe von magnetischen Kräften beziehungsweise mit Hilfe eines Magnetfelds voneinander zu separieren. Das Separieren der Ausgangsmaterialien ermöglicht es, die Ausgangsmaterialien zunächst in miteinander vermischtem Zustand handhaben, insbesondere transportieren, zu können und danach voneinander zu separieren, sodass das Bauelement beziehungsweise die jeweilige Schicht besonders bedarfsgerecht und dabei wahlweise aus dem ersten Ausgangsmaterial und aus dem zweiten Ausgangsmaterial herzustellen.

Um die Ausgangsmaterialien besonders vorteilhaft herstellen zu können beziehungsweise bedarfsgerecht vorteilhafte Eigenschaften des Bauelements realisieren zu können, ist es in weiterer Ausgestaltung der Erfindung vorgesehen, dass das erste Ausgangsmaterial frei von dem zweiten Werkstoff ist. Ein dritter Aspekt der Erfindung betrifft ein Verfahren zur additiven Fertigung eines Bauelements. Bei dem Verfahren gemäß dem dritten Aspekt der Erfindung werden Schichten aus wenigstens einem pulverförmigen Ausgangsmaterial hergestellt und aufeinander angeordnet, indem das pulverförmige Ausgangsmaterial mit wenigstens einem Energiestrahl, insbesondere wenigstens einem Laserstrahl, bestrahlt und dadurch aufgeschmolzen beziehungsweise geschmolzen wird, wodurch das Bauelement aus den Schichten und somit schichtweise, das heißt Schicht für Schicht hergestellt wird.

Um nun auf besonders einfache Weise sowie bedarfsgerecht vorteilhafte Eigenschaften des Bauelements realisieren zu können, ist es bei dem dritten Aspekt der Erfindung vorgesehen, dass zumindest eine der Schichten in Abhängigkeit von Prozessparametern hergestellt wird, welche während des Herstellens der zumindest einen Schicht variieren beziehungsweise variiert werden und jeweils eine Anzahl an aufeinanderfolgenden Bestrahlungen zumindest eines Teils des zum Herstellen der zumindest einen Schicht verwendeten Ausgangsmaterials und/oder zumindest eine Relativbewegung zwischen dem Energiestrahl und dem pulverförmigen Ausgangsmaterial definieren. Unter dem Merkmal, dass die Prozessparameter während des Herstellens der zumindest einen Schicht variieren, kann insbesondere verstanden werden, dass die Prozessparameter hinsichtlich ihrer Werte beziehungsweise ihrer Größen variiert werden, wobei beispielsweise die Schichten, aus welchen das Bauelement hergestellt wird, in Abhängigkeit von derselben Art und derselben Anzahl an Prozessparametern hergestellt werden. Mit anderen Worten sind die Prozessparameter über die Schichten beziehungsweise über das Herstellen der Schichten hinweg hinsichtlich ihrer Art und Anzahl gleich beziehungsweise die Prozessparameter sind während des Herstellens der zumindest einen Schicht in ihrer Anzahl und ihrer Art gleich und bleiben gleich, jedoch werden die Prozessparameter insbesondere hinsichtlich ihrer Werte beziehungsweise ihrer Größen während des Herstellens der zumindest einen Schicht variiert. Eine Bestrahlung des Ausgangsmaterials mit dem Energiestrahl wird auch als Belichtung bezeichnet. Im Hinblick auf die Anzahl an Bestrahlungen beziehungsweise Belichtungen ist unter dem Merkmal, dass die Prozessparameter während des Herstellens der zumindest einen Schicht variieren, insbesondere zu verstehen, dass beispielsweise der auch als erster Teil bezeichnete zumindest eine Teil des pulverförmigen Ausgangsmaterials eine erste Anzahl an Belichtungen erfährt, wobei beispielsweise ein zweiter Teil des Ausgangsmaterials, aus welchem die zumindest eine Schicht hergestellt wird, eine von der ersten Anzahl unterschiedliche zweite Anzahl an Belichtungen erfährt. Dabei sind beispielsweise beide Anzahlen größer als 1 oder aber eine der Anzahlen beträgt genau 1 und die andere Anzahl ist größer als 1. Dies bedeutet beispielsweise, dass der erste Teil n-mal, insbesondere aufeinanderfolgend, mit dem Energiestrahl beaufschlagt und somit bestrahlt wird, wobei beispielsweise der zweite Teile m-mal, insbesondere nacheinander beziehungsweise aufeinanderfolgend, mit dem Energiestrahl beaufschlagt wird. Dabei bezeichnet n eine gegenüber 0 größere, ganze und positive erste Zahl, und m bezeichnet eine gegenüber 0 größere, ganze und positive sowie von der ersten Zahl unterschiedliche zweite Zahl.

Des Weiteren ist es bei dem dritten Aspekt der Erfindung alternativ oder zusätzlich vorgesehen, dass die Prozessparameter eine Eindringtiefe des Energiestrahls in das Ausgangsmaterial definieren. Somit dringt beispielsweise der Energiestrahl eine erste Strecke in den erste Teil und eine von der ersten Strecke unterschiedliche zweite Strecke in den zweiten Teil des Ausgangsmaterials ein, sodass beispielsweise der erste Teil über die erste Strecke und der zweite Teil über die zweite Strecke aufgeschmolzen werden.

Im Hinblick auf die Relativbewegung ist unter dem Merkmal, dass die Prozessparameter während des Herstellens der zumindest einen Schicht variiert werden insbesondere zu verstehen, dass beispielsweise der Energiestrahl während des Herstellens der zumindest einen Schicht auf eine erste Art relativ zu dem ersten Teil und auf eine von der ersten Art unterschiedliche zweite Art relativ zu dem zweiten Teil des pulverförmigen Ausgangsmaterials bewegt wird. Die Relativbewegung zwischen dem Energiestrahl und dem ersten Teil und die Relativbewegung zwischen dem Energiestrahl und dem zweiten Teil unterscheiden sich beispielsweise in wenigstens einer Richtung und/oder in wenigstens einer Geschwindigkeit voneinander, wodurch bedarfsgerecht gewünschte Eigenschaften, insbesondere lokal voneinander unterschiedliche Eigenschaften, des Bauelements auf einfache Weise hergestellt werden können. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Ein vierter Aspekt der Erfindung betrifft ein Verfahren zur additiven Fertigung eines Bauelements. Bei dem Verfahren gemäß dem vierten Aspekt der Erfindung werden Schichten aus wenigstens einem pulverförmigen Ausgangsmaterial hergestellt und aufeinander angeordnet, indem das pulverförmige Ausgangsmaterial mit wenigstens einem Energiestrahl bestrahlt und dadurch aufgeschmolzen wird. Hierdurch wird das Bauelement schichtweise, das heißt Schicht für Schicht hergestellt wird.

Um nun auf besonders einfache und somit zeit- und kostengünstige Weise bedarfsgerecht besonders vorteilhafte Eigenschaften des Bauelements realisieren zu können, ist es bei dem vierten Aspekt der Erfindung vorgesehen, dass zumindest eine erste der Schichten in Abhängigkeit von ersten Prozessparametern und zumindest eine zweite der Schichten in Abhängigkeit von den ersten Prozessparametern unterschiedlichen zweiten Prozessparametern hergestellt wird, wobei die jeweiligen Prozessparameter eine Anzahl an aufeinanderfolgenden Bestrahlungen zumindest eines Teils des zum Herstellen der jeweiligen Schicht verwendeten Ausgangsmaterials und/oder zumindest eine Relativbewegung zwischen dem Energiestrahl und dem jeweiligen, zum Herstellen der jeweiligen Schicht verwendeten pulverförmigen Ausgangsmaterial und/oder eine Eindringtiefe des Energiestrahls in das Ausgangsmaterial definieren. Vorteile und vorteilhafte Ausgestaltungen des ersten Aspekts, des zweiten Aspekts und des dritten Aspekts der Erfindung sind als Vorteile und vorteilhafte Ausgestaltungen des vierten Aspekts der Erfindung anzusehen und umgekehrt.

Unter dem Merkmal, dass die zweiten Prozessparameter von den ersten Prozessparametern unterschiedlich sind, ist insbesondere zu verstehen, dass die ersten und zweiten Prozessparameter hinsichtlich ihrer Art und Anzahl gleich sind, wobei sich jedoch die ersten und zweiten Prozessparameter hinsichtlich ihrer Größen beziehungsweise Werte voneinander unterscheiden. Somit wird beispielsweise das pulverförmige Ausgangsmaterial zum Herstellen der ersten Schicht n-mal belichtet, wobei das pulverförmige Ausgangsmaterial zum Herstellen der zweiten Schicht m-mal belichtet wird. Alternativ oder zusätzlich wird der Energiestrahl beim Herstellen der ersten Schicht auf eine erste Art und beim Herstellen der zweiten Schicht auf eine von der ersten Art unterschiedliche zweite Art relativ zu dem jeweiligen pulverförmigen Ausgangsmaterial bewegt. Alternativ oder zusätzlich dringt der Energiestrahl beim Herstellen der ersten Schicht um eine erste Strecke und beim Herstellen der zweiten Schicht um eine von der ersten Strecke unterschiedliche zweite Strecke in das jeweilige Ausgangsmaterial ein. Hierdurch können auf einfache, zeit- und kostengünstige Weise besonders bedarfsgerecht gewünschte und insbesondere lokal voneinander unterschiedliche Eigenschaften des Bauelements dargestellt werden.

Als besonders vorteilhaft hat es sich gezeigt, wenn die jeweilige Relativbewegung eine jeweilige Geschwindigkeit aufweist, mit welcher die Relativbewegung zwischen dem Energiestrahl und dem Ausgangsmaterial erfolgt. Dies bedeutet beispielsweise, dass die Relativbewegung zwischen dem Energiestrahl und dem ersten Teil beziehungsweise dem Ausgangsmaterial zum Herstellen der ersten Schicht mit einer ersten Geschwindigkeit und die Relativbewegung zwischen dem Energiestrahl und dem zweiten Teil beziehungsweise dem Ausgangsmaterial zum Herstellen der zweiten Schicht mit einer von der ersten Geschwindigkeit unterschiedlichen zweiten Geschwindigkeit erfolgt.

Als besonders vorteilhaft hat es sich gezeigt, wenn die jeweilige Relativbewegung eine jeweilige Richtung aufweist, in welche die Relativbewegung zwischen dem Energiestrahl und dem Ausgangsmaterial erfolgt. Somit erfolgt beispielsweise die Relativbewegung zwischen dem Energiestrahl und dem ersten Teil beziehungsweise dem Ausgangsmaterial zum Herstellen der ersten Schicht in eine erste Richtung, und die Relativbewegung zwischen dem Energiestrahl und dem zweiten Teil beziehungsweise dem Ausgangsmaterial zum Herstellen der zweiten Schicht erfolgt in eine von der ersten Richtung unterschiedliche zweite Richtung. Beispielsweise verlaufen die Richtungen schräg oder senkrecht zueinander oder die Richtungen sind einander entgegengesetzt.

Der Erfindung liegen insbesondere die folgenden Erkenntnisse zugrunde: Additive Fertigungsverfahren wie beispielsweise pulverbettbasierte Fertigungsverfahren basieren üblicherweise auf einem wiederholten, schichtweisen Auftrag von Pulver, insbesondere Metallpulver, und selektiver Verfestigung des Pulvers mittels Strahlenergie. Der beispielsweise als Laserstrahl ausgebildete Energiestrahl beziehungsweise eine Vorrichtung, insbesondere ein Laser, zum Bereitstellen des Energiestrahls wird beispielsweise entlang wenigstens einer oder mehrerer Bahnen, insbesondere relativ zu dem Pulver bewegt, um die jeweiligen Schichten herzustellen. Üblicherweise werden die Bahnen des Energiestrahls sowie Eigenschaften des Energiestrahls, insbesondere in den einzelnen Schichten, über Parameter festgelegt. Die Parameter definieren somit eine so genannte Scanstrategie, gemäß welcher das Ausgangsmaterial mit dem Energiestrahl beaufschlagt wird. Außerdem definieren beziehungsweise charakterisieren die Parameter beispielsweise eine Belichtungsstrategie, gemäß welcher das Ausgangsmaterial belichtet wird. Daraus ergeben sich insbesondere je nach verwendetem Ausgangsmaterial und Scanstrategie beziehungsweise Belichtung bestimmte Materialeigenschaften in dem auch als Bauteil bezeichneten Bauelement. Üblicherweise wird dabei jede Schicht in Abhängigkeit von den gleichen oder gar von denselben Prozessparametern hergestellt. Eine Möglichkeit einer Parametersteuerung beim Aufbau des Bauelements ist üblicherweise nicht möglich. Mit anderen Weisen ist es üblicherweise nicht vorgesehen, die Prozessparameter beziehungsweise die Belichtung während des Herstellens des Bauelements beziehungsweise während des Herstellens der jeweiligen Schicht zu variieren. Somit sind aus dem Herstellen resultierende Materialeigenschaften des Bauelements beziehungsweise im Bauelement meist gleichbleibend und variieren nicht. Dementsprechend können keine Materialeigenschaften in den Schichten selbst hergestellt werden. Außerdem existiert üblicherweise kein Wechsel des Ausgangsmaterials.

Bei dem jeweiligen erfindungsgemäßen Verfahren ist es demgegenüber jedoch vorgesehen, während des Herstellens des Bauelements und vorzugsweise während des Herstellens der jeweiligen Schicht die Prozessparameter und/oder die Belichtungen und/oder die Eindringtiefe zu variieren und/oder das Ausgangsmaterial zu variieren, um das Bauelement aus unterschiedlichen pulverförmigen Ausgangsmaterialien und/oder auf Basis von unterschiedlichen Scanstrategien herzustellen.

Sind üblicherweise unterschiedliche Bereiche mit unterschiedlichen Eigenschaften gewünscht, so muss das herzustellende Bauelement in einzelne, unterschiedliche Teilkörper geteilt werden, denen dann unterschiedliche Prozessparameter zugeordnet werden. Diese Teilkörper werden dann separat voneinander und/oder nacheinander hergestellt und daran anschließend miteinander verbunden. Dies ist zeit- und kostenaufwändig, was nun durch das erfindungsgemäße Verfahren vermieden werden kann.

Durch eine Anpassung der Parameter in den unterschiedlichen Schichten und/oder in den einzelnen Schichten selbst können unterschiedliche Eigenschaften in unterschiedlichen Bereichen des Bauelements eingestellt werden, wodurch graduierte Materialeigenschaftsbereiche des Bauelements erzeugt werden können. Diese Materialeinstellung kann durch Variieren der Prozessparameter und/oder durch Variieren der Belichtung und/oder durch Variieren der Eindringtiefe und/oder durch Variieren des Ausgangsmaterials und so beispielsweise durch Aufbringen unterschiedlicher Pulver zum Herstellen der Schichten und/oder bei einem Schichtwechsel erreicht werden.

Um die Pulver beispielsweise besonders vorteilhaft voneinander separieren zu können, ist der zweite Werkstoff beispielsweise eine magnetische oder nicht-magnetische Schicht, sodass dann die Pulver beispielsweise mittels eines magnetischen und/oder elektrostatischen Felds beziehungsweise in einem magnetischen und/oder elektrostatischen Feld voneinander abgetrennt und somit voneinander separiert werden können. Dabei ist es denkbar, die Schichten des herzustellenden Bauelements anzupassen beziehungsweise bei einer Kunststoffschicht kann diese komplett thermisch durch den Energiestrahl, insbesondere durch dessen Energie, zersetzt werden.

Insgesamt ist erkennbar, dass im Rahmen des erfindungsgemäßen Verfahrens das Bauelement aus zumindest oder genau zwei unterschiedlichen Materialien beziehungsweise aus gleichen Materialien mit unterschiedlichen Eigenschaften durch entsprechende Prozessparameter beziehungsweise Prozessführung hergestellt werden kann. Alternativ oder zusätzlich können unterschiedliche Eigenschaften durch Variierung der Prozessparameter von Schicht zu Schicht und/oder in der jeweiligen Schicht realisiert werden, beispielsweise durch eine Doppelbelichtung und/oder durch eine Variierung und/oder Anpassung der Eindringtiefe et cetera. Außerdem kann eine Multischichtstruktur durch unterschiedliche Anzahl von Schichten mit unterschiedlichen Eigenschaften dargestellt werden.

Ein fünfter Aspekt der Erfindung betrifft eine Vorrichtung, welche zum Durchführen des erfindungsgemäßen Verfahrens ausgebildet ist. Vorteile und vorteilhafte Ausgestaltungen des ersten Aspekts, des zweiten Aspekts, des dritten Aspekts und des vierten Aspekts der Erfindung sind als Vorteile und vorteilhafte Ausgestaltungen des fünften Aspekts der Erfindung anzusehen und umgekehrt.

Ein sechster Aspekt der Erfindung betrifft ein Computerprogramm beziehungsweise ein Computerprogrammprodukt, welches Befehle umfasst, die bewirken, dass die Vorrichtung gemäß dem fünften Aspekt der Erfindung das Verfahren gemäß dem ersten Aspekt, dem zweiten Aspekt, dem dritten Aspekt und/oder dem vierten Aspekt der Erfindung ausführt, insbesondere wenn das Computerprogramm beziehungsweise das Computerprogrammprodukt durch einen Computer, insbesondere durch einen elektronische Recheneinrichtung der Vorrichtung, ausgeführt wird. Das einfach auch als Programm bezeichnete Computerprogramm ist, insbesondere direkt, in einen Speicher des Computers beziehungsweise der elektronischen Recheneinrichtung ladbar. Vorteile und vorteilhafte Ausgestaltungen des ersten Aspekts, des zweiten Aspekts, des dritten Aspekts, des vierten Aspekts und des fünften Aspekts der Erfindung sind als Vorteile und vorteilhafte Ausgestaltungen des sechsten Aspekts der Erfindung anzusehen und umgekehrt.

Ein siebter Aspekt der Erfindung betrifft ein computerlesbares Medium, Speichermedium beziehungsweise einen computerlesbaren Datenträger, wobei auf dem computerlesbaren Medium gemäß dem siebten Aspekt der Erfindung das Computerprogramm gemäß dem sechsten Aspekt der Erfindung gespeichert ist. Vorzugsweise umfasst das computerlesbare Medium gemäß dem siebten Aspekt der Erfindung Befehle, die bei der Ausführung durch einen Computer, insbesondere durch die elektronische Recheneinrichtung oder Vorrichtung, diesen beziehungsweise diese veranlassen, das Verfahren gemäß dem ersten Aspekt, dem zweiten Aspekt, dem dritten Aspekt und/oder dem vierten Aspekt der Erfindung auszuführen. Vorteile und vorteilhafte Ausgestaltungen des ersten Aspekts, des zweiten Aspekts, des dritten Aspekts, des vierten Aspekts, des fünften Aspekts und des sechsten Aspekts der Erfindung sind als Vorteile und vorteilhafte Ausgestaltungen des siebten Aspekts der Erfindung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Perspektivansicht eines Bauelements, welches mittels eines erfindungsgemäßen Verfahrens hergestellt wurde;
- FIG 2: eine schematische Darstellung einer erfindungsgemäßen Vorrichtung;
- FIG 3: ausschnittsweise eine schematische Perspektivansicht einer möglichen Schicht des Bauelements;
- FIG 4: ausschnittsweise eine schematische Perspektivansicht einer möglichen Schicht des Bauelements; und
- FIG 5: schematische Schnittansichten von Partikeln von pulverförmigen Ausgangsmaterialien, aus welchen das Bauelement hergestellt werden kann.

In den Figuren sind gleiche oder funktionsgleiche Elemente mit gleichen Bezugszeichen versehen.

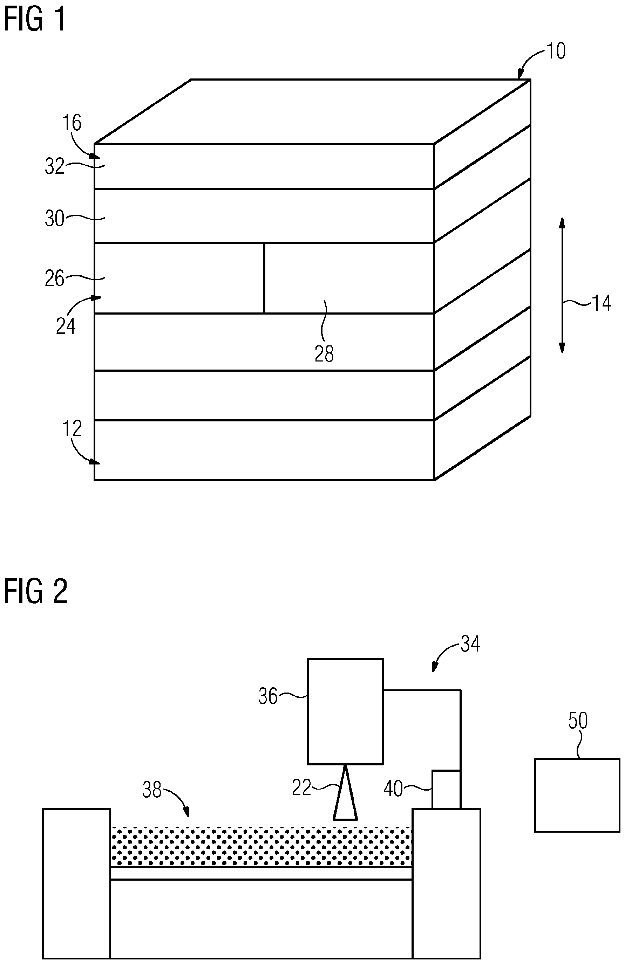

FIG 1 zeigt in einer schematischen Perspektivansicht ein Bauelement 10, welches durch additive Fertigung und somit schichtweise, das heißt Schicht für Schicht hergestellt wurde beziehungsweise ist. Dies bedeutet, dass das auch als Bauteil bezeichnete Bauelement 10 einen Schichtaufbau 12 umfasst. Der Schichtaufbau 12 weist mehrere, entlang wenigstens oder genau einer in FIG 1 durch einen Doppelpfeil 14 veranschaulichten Richtung aufeinander angeordnete Schichten 16 auf, aus welchen das Bauelement 10 hergestellt ist. Die Schichten 16 sind dabei miteinander verbunden.

Bei einem Verfahren zur additiven Fertigung des Bauelements 10 werden somit die Schichten 16 hergestellt, und, insbesondere entlang der durch den Doppelpfeil 14 veranschaulichten Richtung, aufeinander angeordnet und miteinander verbunden, wodurch das Bauelement 10 schichtweise hergestellt wird.

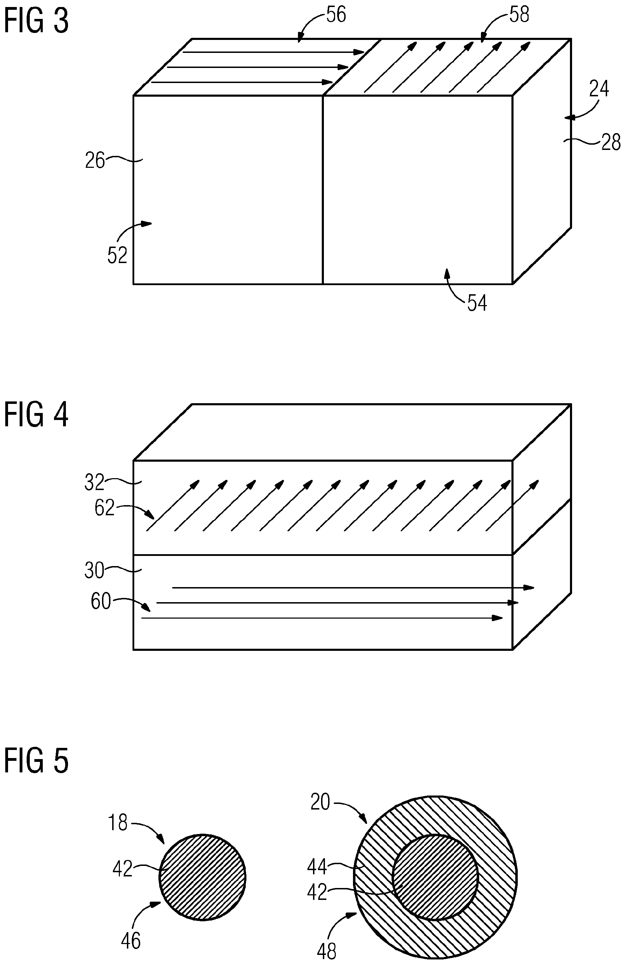

Um nun auf besonders einfache, zeit- und kostengünstige Weise besonders vorteilhafte, insbesondere mechanische, Eigenschaften des Bauelements 10 realisieren zu können, kann vorgesehen sein, dass bei dem Verfahren zumindest eine der Schichten 15 aus wenigstens zwei voneinander unterschiedlichen, pulverförmigen Ausgangsmaterialien 18 und 20 (FIG 5) hergestellt wird, in dem das jeweilige Ausgangsmaterial 18 beziehungsweise 20 mit wenigstens einem vorliegend als Laserstrahl 22 (FIG 2) ausgebildeten Energiestrahl bestrahlt und dadurch geschmolzen beziehungsweise aufgeschmolzen wird. Die zumindest eine Schicht ist beispielsweise in FIG 1 mit 24 bezeichnet und eine der Schichten 16. Somit wird die Schicht 24 beispielsweise nicht aus genau einem pulverförmigen Ausgangsmaterial hergestellt, sondern die Schicht 24 wird beispielsweise aus den voneinander unterschiedlichen, pulverförmigen Ausgangsmaterialien 18 und 20 hergestellt. Somit ist beispielsweise ein aus FIG 1 erkennbarer erster Teil 26 der Schicht 24 aus dem pulverförmigen Ausgangsmaterial 18 und ein zweiter Teil 28 der Schicht 24 aus dem pulverförmigen Ausgangsmaterial 20 hergestellt. Die Teile 26 und 28 sind dabei nebeneinander angeordnet und grenzen, insbesondere direkt, aneinander an.

In FIG 1 ist eine weitere der Schichten 16 mit 30 bezeichnet, wobei die Schichten 24 und 30 insbesondere entlang der durch den Doppelpfeil 14 veranschaulichten Richtung aufeinander angeordnet sind. Außerdem ist in FIG 1 eine dritte der Schichten 16 mit 32 bezeichnet, wobei die Schichten 30 und 32 insbesondere entlang der durch den Doppelpfeil 14 veranschaulichten Richtung, insbesondere direkt, aufeinander angeordnet sind. Die vorherigen und folgenden Ausführungen zur Schicht 24 können auch ohne weiteres auf die Schicht 30 und/oder die Schicht 32 übertragen werden und umgekehrt.

Alternativ oder zusätzlich kann bei dem Verfahren vorgesehen sein, dass beispielsweise die Schicht 30 aus dem pulverförmigen Ausgangsmaterial 18 und die Schicht 32 aus dem von dem pulverförmigen Ausgangsmaterial 18 unterschiedlichen, pulverförmigen Ausgangsmaterial 20 hergestellt ist beziehungsweise wird, indem das jeweilige Ausgangsmaterial 18 beziehungsweise 20 mit dem Laserstrahl 22 beaufschlagt und dadurch bestrahlt und somit aufgeschmolzen beziehungsweise geschmolzen wird.

FIG 2 zeigt in einer schematischen Darstellung eine Vorrichtung 34, welche zum Durchführen des Verfahrens ausgebildet ist. Hierzu weist die Vorrichtung 34 eine vorliegend als Laser 36 ausgebildete Einheit auf, mittels welcher der Laserstrahl 22 bereitstellbar ist beziehungsweise bereitgestellt wird. Außerdem weist die Vorrichtung 34 ein Pulverbett 38 auf, in welchem das jeweilige, einfach auch als Pulver bezeichnete Ausgangsmaterial 18 beziehungsweise 20 anordenbar ist, beziehungsweise angeordnet wird. Die Vorrichtung 34 umfasst darüber hinaus einen Antrieb 40, mittels welchem Relativbewegungen zwischen dem Laserstrahl 22 und dem jeweiligen, in dem Pulverbett 38 angeordneten Pulver bewirkbar sind beziehungsweise bewirkt werden. Vorliegend wird beispielsweise mittels des Antriebs 40 der Laserstrahl 22 relativ zu dem Pulverbett 38 und somit relativ zu dem jeweiligen, in dem Pulverbett 38 angeordneten Pulver bewegt, während das Pulverbett 38 und das jeweilige, in dem Pulverbett 38 angeordnete Pulver ortsfest verbleiben.

Die pulverförmigen Ausgangsmaterialien 18 und 20 liegen beispielsweise zunächst in miteinander vermischtem Zustand vor, wobei die pulverförmigen Ausgangsmaterialien 18 und 20 beispielsweise in einem Behälter, insbesondere in dem Pulverbett 38, aufgenommen und dabei miteinander vermischt sind. Dabei ist es denkbar, dass die zunächst miteinander vermischten Ausgangsmaterialien 18 und 20 vor dem Herstellen der jeweiligen Schicht 24, 30 beziehungsweise 32 voneinander separiert werden. Dabei können die Ausgangsmaterialien 18 und 20 beispielsweise durch Zentrifugieren und/oder mittels wenigstens eines Magnetfelds voneinander separiert werden. Ferner ist es denkbar, dass die zunächst miteinander vermischten Ausgangsmaterialien in einem Fluid, insbesondere in einer Flüssigkeit, angeordnet und mittels des Fluids voneinander separiert werden.

Insbesondere ist es denkbar, dass im Rahmen des Separierens eines der Pulver von dem jeweils anderen Pulver separiert und somit getrennt wird. Beispielsweise wird das von dem anderen Pulver separierte eine Pulver nach dem Separieren in dem Pulverbett 38 angeordnet und danach mit dem Laserstrahl 22 beaufschlagt und somit bestrahlt, sodass beispielsweise die jeweilige Schicht 24, 30 beziehungsweise 32, insbesondere der Teil 26 oder 28, aus dem einen, sich in dem Pulverbett 38 befindenden und von dem anderen Pulver separierten Pulver hergestellt wird. Beispielsweise werden die Pulver in dem Behälter voneinander separiert und/oder durch das Separieren der Pulver wird das eine Pulver aus dem Behälter entfernt und von dem Behälter in das Pulverbett 38 gefördert.

Ferner ist es denkbar, dass die Pulver, insbesondere in miteinander vermischtem Zustand, in dem Pulverbett 38 angeordnet werden, sodass sich die Pulver zunächst in miteinander gemischtem Zustand in dem Pulverbett 38 befinden. Nach dem Anordnen der Pulver in dem Pulverbett 38 werden die Pulver separiert, wodurch das eine Pulver von dem anderen Pulver separiert beziehungsweise getrennt wird. Hierdurch verbleibt beispielsweise das eine Pulver in dem Pulverbett 38, und das andere Pulver wird aus dem Pulverbett 38 entfernt. Daraufhin wird das eine, in dem Pulverbett 38 verbleibende oder verbliebene Pulver mit dem Laserstrahl 22 beaufschlagt, sodass die jeweilige Schicht 24, 30 beziehungsweise 32 oder der Teil 26 oder 28 aus dem einen, in dem Pulverbett 38 verbliebenen Pulver hergestellt wird.

Aus FIG 5 ist erkennbar, dass beispielsweise das erste pulverförmige Ausgangsmaterial 18 einen ersten Werkstoff 42 aufweist. Das pulverförmige Ausgangsmaterial 20 weist den ersten Werkstoff 42 und einen von dem ersten Werkstoff 42 unterschiedlichen zweiten Werkstoff 44 auf. Dabei ist das Ausgangsmaterial 18 frei von dem zweiten Werkstoff 44. Ferner ist aus FIG 5 erkennbar, dass das pulverförmige Ausgangsmaterial 18 voneinander lose Partikel aufweist, von denen in FIG 5 ein mit 46 bezeichneter Partikel erkennbar ist. Der Partikel 46 ist dabei aus dem Werkstoff 42 gebildet und beispielsweise eine Kugel.

Das Ausgangsmaterial 20 weist voneinander lose Partikel auf, von denen in FIG 5 ein mit 48 bezeichneter Partikel erkennbar ist. Der Partikel 48 ist dabei aus den Werkstoffen 42 und 44 gebildet, wobei Werkstoff 42 von dem Werkstoff 44 ummantelt ist. Der Werkstoff 42 bildet beispielsweise eine erste Kugel, und der Werkstoff 44 bildet beispielsweise eine zweite Kugel, in welcher die erste Kugel aufgenommen ist. Somit ist die erste Kugel von beziehungsweise mit der zweiten Kugel ummantelt. Der Werkstoff 42 ist beispielsweise ein metallischer und/oder magnetischer Werkstoff. Der Werkstoff 44 ist beispielsweise ein nicht-magnetischer Werkstoff. Insbesondere kann der Werkstoff 44 ein Kunststoff sein. Aus FIG 5 ist insbesondere erkennbar, dass der Werkstoff 42 mit dem Werkstoff 44 ummantelt ist. Ferner ist es denkbar, dass anstelle des Werkstoffs 42 des Ausgangsmaterials 20 ein dritter Werkstoff vorgesehen ist, wobei der dritte Werkstoff ein von dem ersten Werkstoff und von dem zweiten Werkstoff unterschiedlicher Werkstoff ist. Der erste Werkstoff und/oder der dritte Werkstoff und/oder der zweite Werkstoff kann ein metallischer Werkstoff sein. Vorzugsweise ist der dritte Werkstoff ein magnetischer Werkstoff.

Da das Ausgangsmaterial 18 frei von dem Werkstoff 44 ist, sodass der Werkstoff 42 des Ausgangsmaterials 18 nicht mit dem Werkstoff 44 ummantelt ist, kann beispielsweise ein zum Separieren der Pulver verwendetes Magnetfeld mit dem Partikel 46 wechselwirken, während eine Wechselwirkung zwischen dem Magnetfeld und dem Partikel 48 unterbleibt. In der Folge können die Partikel 46 und 48 separiert werden, insbesondere derart, dass der Partikel 46 in dem Pulverbett 38 verbleibt und der Partikel 48 aus dem Pulverbett entfernt wird oder umgekehrt. In der Folge kann die jeweilige Schicht 16 aus dem in dem Pulverbett 38 verbleibende Partikel 46 beziehungsweise 48 hergestellt werden.

Insbesondere ist es denkbar, dass mittels des Laserstrahls 22 der Werkstoff 44 beziehungsweise eine durch den Werkstoff 44 gebildete Ummantelung entfernt und dabei beispielsweise geschmolzen und/oder verbrannt wird, sodass dann die jeweilige Schicht 16 aus dem Werkstoff 42 beziehungsweise aus dem dritten Werkstoff hergestellt werden kann. Dadurch ist es möglich, die Schichten 30 und 32 beziehungsweise die Teile 26 und 28 aus voneinander unterschiedlichen Werkstoffen beziehungsweise aus den voneinander unterschiedlichen Ausgangsmaterialien 18 und 20 herzustellen.

Am Beispiel der in FIG 3 gezeigten Schicht 24 ist erkennbar, dass es im Rahmen des Verfahrens alternativ oder zusätzlich möglich ist, zumindest eine der Schichten 16 und dabei beispielsweise die Schicht 24 in Abhängigkeit von Prozessparametern herzustellen. Hierzu umfasst die Vorrichtung 34 beispielsweise eine auch als Computer bezeichnete oder als Computer ausgebildete elektronische Recheneinrichtung 50, welche den Antrieb 40 ansteuert und dadurch betreibt, insbesondere steuert oder regelt. Alternativ oder zusätzlich steuert die Recheneinrichtung 50 den Laser 36 an, sodass der Antrieb 40 und/oder die Einheit (Laser 36) in Abhängigkeit von den Prozessparametern mittels der elektronischen Recheneinrichtung 50 betrieben, insbesondere gesteuert oder geregelt, wird. Dabei steuert die elektronische Recheneinrichtung 50 den Antrieb 40 und/oder die Einheit (Laser 36) in Abhängigkeit von den genannten Prozessparametern an, wodurch beispielsweise die Schicht 24 in Abhängigkeit von den Prozessparametern hergestellt wird. Dabei kann vorgesehen sein, dass während des Herstellens der Schicht 24 die Prozessparameter variieren beziehungsweise variiert werden.

Aus FIG 3 ist erkennbar, dass die Schicht 24 beispielsweise aus einem der zuvor genannten Pulver hergestellt wird. Dabei wird der Teil 26 der Schicht 24 aus einem ersten Teil 52 des zum Herstellen der Schicht 24 verwendeten Pulvers hergestellt, und der Teil 28 der Schicht 24 wird aus einem zweiten Teil 54 des zum Herstellen der Schicht 24 verwendeten Pulvers hergestellt. Die Prozessparameter definieren beziehungsweise charakterisieren dabei beispielsweise eine Anzahl an aufeinanderfolgenden Bestrahlungen des jeweiligen Teils 52 beziehungsweise 54, sodass beispielsweise dadurch, dass während des Herstellens der Schicht 24 die Prozessparameter variiert werden, der Teil 52 n-mal und der Teil 54 m-mal mit dem Laserstrahl 22 beaufschlagt und dadurch bestrahlt wird. Mit n ist beispielsweise eine, ganze und positive erste Zahl bezeichnet, welche 1 oder größer als 1 ist. Mit m ist eine ganze, positive zweite Zahl bezeichnet, welche größer als die erste Zahl ist. Somit wird beispielsweise der Teil 52 genau einmal mit dem Laserstrahl 22 beaufschlagt, wobei der Teil 54 beispielsweise genau zweimal, genau dreimal oder demgegenüber mehrmals mit dem Laserstrahl 22 beaufschlagt wird.

Alternativ oder zusätzlich kann vorgesehen sein, dass die Prozessparameter, welche während des Herstellens der Schicht 24 variiert werden, wenigstens eine Relativbewegung zwischen dem Laserstrahl 22 und dem Pulver, aus welchem die Schicht 24 hergestellt wird, definieren beziehungsweise charakterisieren. Dadurch, dass die Prozessparameter während des Herstellens der Schicht 24 variiert werden, wird beispielsweise der Laserstrahl 22 relativ zu dem Teil 52 in eine in FIG 3 durch Pfeile 56 veranschaulichte erste Richtung bewegt, während der Teil 52 mit dem Laserstrahl 22 beaufschlagt wird. Ferner wird beispielsweise der Laserstrahl 22 in eine von der ersten Richtung unterschiedliche und in FIG 3 durch Pfeile 58 veranschaulichte zweite Richtung relativ zu dem Teil 54 bewegt, während der Teil 54 mit dem Laserstrahl 22 beaufschlagt und dadurch bestrahlt wird. Aus FIG 3 ist anhand der Pfeile 56 und 58 erkennbar, dass die erste Richtung und die zweite Richtung voneinander unterschiedlich sind, wobei die Richtung schräg oder vorliegend senkrecht zueinander verlaufen. Ferner wäre es denkbar, dass die zweite Richtung der ersten Richtung entgegengesetzt ist.

Alternativ oder zusätzlich charakterisieren die Prozessparameter eine jeweilige Eindringtiefe des Laserstrahls 22 in das jeweilige Pulver beziehungsweise in den jeweiligen Teil 52 und 54. Diesbezüglich kann unter dem Variieren der Prozessparameter beispielsweise verstanden werden, dass der Laserstrahl 22 beim Herstellen des Teils 26 um eine erste Eindringtiefe in den Teil 52 des zum Herstellen der Schicht 24 verwendeten Pulvers eindringt, wobei der Laserstrahl 22 beim Herstellen des Teils 28 um eine zweite Eindringtiefe in den Teil 54 des zum Herstellen der Schicht 24 verwendeten Pulvers eindringt. Dabei ist die zweite Eindringtiefe größer oder kleiner als die erste Eindringtiefe. Insgesamt ist aus FIG 3 erkennbar, dass die Prozessparameter während des Herstellens der Schicht 24 variiert werden, sodass die Teile 26 und 28 derselben Schicht 24 auf unterschiedliche Arten hergestellt werden.

Demgegenüber ist in FIG 4 anhand der Schichten 30 und 32 veranschaulicht, dass alternativ oder zusätzlich vorgesehen sein kann, dass beispielsweise die Schicht 30 auf eine erste Art und die Schicht 32 auf eine von der ersten Art unterschiedliche zweite Art hergestellt wird. Dabei ist jedoch die Schicht 30 für sich betrachtet vollständig durch die erste Art hergestellt, wobei die Schicht 32 für sich betrachtet vollständig durch die zweite Art hergestellt ist. Dies bedeutet im Vergleich zu den Ausführungen zu FIG 3, dass gemäß FIG 4 beim Herstellen der Schicht 30 ein Variieren der Prozessparameter unterbleibt, und beim Herstellen der Schicht 32 unterbleibt ein Variieren der Prozessparameter, wobei jedoch die Schicht 30 in Abhängigkeit von ersten Prozessparametern und die Schicht 32 in Abhängigkeit von den ersten Prozessparametern unterschiedlichen zweiten Prozessparametern hergestellt ist beziehungsweise wird.

Wie bereits zu FIG 3 im Hinblick auf die Teile 26 und 28 geschildert, kann im Hinblick auf FIG 4 vorgesehen sein, dass zum Herstellen der Schicht 30 der Laserstrahl 22, insbesondere mittels des Antriebs 40, in eine in FIG 4 durch Pfeile 60 veranschaulichte erste Richtung relativ zu dem zum Herstellen der Schicht 30 verwendeten Pulver bewegt wird. Beim oder zum Herstellen der Schicht 32 wird der LS 22, insbesondere mittels des Antriebs 40, in eine in FIG 4 durch Pfeile 62 veranschaulicht zweite Richtung relativ zu dem zum Herstellen der Schicht 32 verwendeten Pulver bewegt, wobei - wie anhand der Pfeile 60 und 62 erkennbar ist, die erste Richtung und die zweite Richtung voneinander unterschiedlich sind. Dabei verlaufen beispielsweise die erste Richtung und die zweite Richtung schräg oder aber vorliegend senkrecht zueinander. Alternativ oder zusätzlich ist es denkbar, dass sich die Schichten 30 und 32 im Hinblick auf eine jeweilige Eindringtiefe, um welche der Laserstrahl 22 in das jeweilige Pulver zum Herstellen der jeweiligen Schicht 30 beziehungsweise 32 eindringt, unterscheiden. Alternativ oder zusätzlich unterscheiden sich beispielsweise die Schichten 30 und 32 hinsichtlich der Anzahl an Belichtungen des jeweiligen, zum Herstellen der jeweiligen Schicht 30 beziehungsweise 32 verwendeten Pulvers.

Insgesamt ist erkennbar, dass durch das Variieren des Pulvers und/oder Prozessparameter von Schicht zu Schicht und/oder innerhalb der jeweiligen Schicht bedarfsgerecht und auf besonders einfache und somit zeit- und kostengünstige Weise, insbesondere lokal, voneinander unterschiedliche Eigenschaften des Bauelements 10 realisiert beziehungsweise eingestellt werden können. Somit kann das Bauelement 10 auf zeit- und kostengünstige Weise mit besonders vorteilhaften Eigenschaften hergestellt werden.

### Bezugszeichenliste

- 10: Bauelement
- 12: Schichtaufbau
- 14: Doppelpfeil
- 16: Schichten
- 18: pulverförmiges Ausgangsmaterial
- 20: pulverförmiges Ausgangsmaterial
- 22: Laserstrahl
- 24: Schicht
- 26: Teil
- 28: Teil
- 30: Schicht
- 32: Schicht
- 34: Vorrichtung
- 36: Laser
- 38: Pulverbett
- 40: Antrieb
- 42: erster Werkstoff
- 44: zweiter Werkstoff
- 46: Partikel
- 48: Partikel
- 50: elektronische Recheneinrichtung
- 52: Teil
- 54: Teil
- 56: Pfeile
- 58: Pfeile
- 60: Pfeile
- 62: Pfeile

## Patentansprüche

1. Verfahren zur additiven Fertigung eines Bauelements (10), bei welchem Schichten (16) hergestellt und aufeinander angeordnet werden, wodurch das Bauelement (10) schichtweise hergestellt wird,
**dadurch gekennzeichnet, dass**
zumindest eine der Schichten (16) aus wenigstens zwei voneinander unterschiedlichen, pulverförmigen Ausgangsmaterialien (18, 20) hergestellt wird, indem das jeweilige Ausgangsmaterial (18, 20) mit wenigstens einem Energiestrahl (22) bestrahlt und dadurch geschmolzen wird.

2. Verfahren zur additiven Fertigung eines Bauelements (10), bei welchem Schichten (16) hergestellt und aufeinander angeordnet werden, wodurch das Bauelement (10) schichtweise hergestellt wird,
**dadurch gekennzeichnet, dass**
eine erste der Schichten (16) aus einem ersten pulverförmigen Ausgangsmaterial (18) und eine zweite der Schichten (16) aus einem von dem ersten pulverförmigen Ausgangsmaterial (18) unterschiedlichen zweiten, pulverförmigen Ausgangsmaterial (20) hergestellt wird, indem das jeweilige Ausgangsmaterial (18, 20) mit wenigstens einem Energiestrahl (22) bestrahlt und dadurch geschmolzen wird.

3. Verfahren nach Anspruch 1 oder 2,
**dadurch gekennzeichnet, dass**
vor dem Herstellen der Schicht (16) eines der Ausgangsmaterialien (18, 20) von dem anderen Ausgangsmaterial (20, 18) separiert wird.

4. Verfahren nach Anspruch 3,
**dadurch gekennzeichnet, dass**
die Ausgangsmaterialien (18, 20) durch Zentrifugieren und/oder mittels wenigstens eines Magnetfelds voneinander separiert werden.

5. Verfahren nach Anspruch 3 oder 4,
**dadurch gekennzeichnet, dass**
die Ausgangsmaterialien (18, 20) in einem Fluid, insbesondere in einer Flüssigkeit, angeordnet und mittels des Fluids voneinander separiert werden.

6. Verfahren nach einem der Ansprüche 3 bis 5,
**dadurch gekennzeichnet, dass**
das von dem anderen Ausgangsmaterial (20, 18) separierte eine Ausgangsmaterial (18, 20) nach dem Separieren in einem Pulverbett (38) angeordnet und danach mit dem Energiestrahl (22) bestrahlt wird.

7. Verfahren nach einem der Ansprüche 3 bis 5,
**dadurch gekennzeichnet, dass**
die Ausgangsmaterialien (18, 20) in einem Pulverbett (38) angeordnet und danach voneinander separiert werden, woraufhin das in dem Pulverbett (38) verbleibende Ausgangsmaterial (18, 20) mit dem Energiestrahl (22) bestrahlt wird.

8. Verfahren nach einem der vorhergehenden Ansprüche, **dadurch gekennzeichnet, dass**
das erste Ausgangsmaterial (18) wenigstens einen ersten Werkstoff (42) aufweist, wobei das zweite Ausgangsmaterial (20) einen zweiten Werkstoff und einen von dem ersten Werkstoff unterschiedlichen dritten Werkstoff aufweist, mit welchem der zweite Werkstoff des zweiten Ausgangsmaterials (20) ummantelt ist.

9. Verfahren nach Anspruch 8,
**dadurch gekennzeichnet, dass**
das erste Ausgangsmaterial (18) frei von dem dritten Werkstoff ist und/oder der zweite Werkstoff (44) dem ersten Werkstoff (42) entspricht.

10. Verfahren zur additiven Fertigung eines Bauelements (10), bei welchem Schichten (16, 24, 30, 32) aus wenigstens einem pulverförmigen Ausgangsmaterial (18, 20) hergestellt und aufeinander angeordnet werden, indem das pulverförmige Ausgangsmaterial (18, 20) mit wenigstens einem Energiestrahl (22) bestrahlt und dadurch aufgeschmolzen wird, wodurch das Bauelement (10) schichtweise hergestellt wird,
**dadurch gekennzeichnet, dass**
zumindest eine der Schichten (16, 24, 30, 32) in Abhängigkeit von Prozessparametern hergestellt wird, welche während des Herstellens der zumindest einen Schicht (16, 24, 30, 32) variieren und jeweils eine Anzahl an aufeinanderfolgenden Bestrahlungen zumindest eines Teils (52, 54) des zum Herstellen der zumindest einen Schicht (16, 24, 30, 32) verwendeten Ausgangsmaterials (18, 20) und/oder zumindest eine Relativbewegung zwischen dem Energiestrahl (22) und dem pulverförmigen Ausgangsmaterial (18, 20) und/oder eine Eindringtiefe des Energiestrahls (22) in das Ausgangsmaterial (18, 20) definieren.

11. Verfahren zur additiven Fertigung eines Bauelements (10), bei welchem Schichten (16, 24, 30, 32) aus wenigstens einem pulverförmigen Ausgangsmaterial (18, 20) hergestellt und aufeinander angeordnet werden, indem das pulverförmige Ausgangsmaterial (18, 20) mit wenigstens einem Energiestrahl (22) bestrahlt und dadurch aufgeschmolzen wird, wodurch das Bauelement (10) schichtweise hergestellt wird,
**dadurch gekennzeichnet, dass**
zumindest eine erste der Schichten (16, 24, 30, 32) in Abhängigkeit von ersten Prozessparametern und zumindest eine zweite der Schichten (16, 24, 30, 32) in Abhängigkeit von den ersten Prozessparametern unterschiedlichen zweiten Prozessparametern hergestellt wird, wobei die jeweiligen Prozessparameter eine Anzahl an aufeinanderfolgenden Bestrahlungen zumindest eines Teils (52, 54) des zum Herstellen der jeweiligen Schicht (16, 24, 30, 32) verwendeten Ausgangsmaterials (18, 20) und/oder zumindest eine Relativbewegung zwischen dem Energiestrahl (22) und dem jeweiligen, zum Herstellen der jeweiligen Schicht (16, 24, 30, 32) verwendeten pulverförmigen Ausgangsmaterial (18, 20) und/oder eine Eindringtiefe des Energiestrahls (20) in das Ausgangsmaterial (18, 20) definieren.

12. Verfahren nach Anspruch 10 oder 11,
**dadurch gekennzeichnet, dass**
die jeweilige Relativbewegung eine jeweilige Geschwindigkeit aufweist, mit welcher die Relativbewegung zwischen dem Energiestrahl (22) und dem Ausgangsmaterial (18, 20) erfolgt.

13. Verfahren nach einem der Ansprüche 10 bis 12,
**dadurch gekennzeichnet, dass**
die jeweilige Relativbewegung eine jeweilige Richtung aufweist, in welche die Relativbewegung zwischen dem Energiestrahl (22) und dem Ausgangsmaterial (18, 20) erfolgt.

14. Vorrichtung (34), welche zum Durchführen eines Verfahrens nach einem der vorhergehenden Ansprüche ausgebildet ist.

15. Computerprogramm, umfassend Befehle, die bewirken, dass die Vorrichtung (34) nach Anspruch 14 das Verfahren nach einem der Ansprüche 1 bis 13 ausführt.
